# EUROPÄISCHE PATENTSCHRIFT

(11) **EP 1 539 826 B1**
(45) Veröffentlichungstag und Bekanntmachung des Hinweises auf die Patenterteilung: **21.10.2009**
(21) Anmeldenummer: 03793646.5
(22) Anmeldetag: 26.07.2003
(51) Int. Cl.: C08F 6/00, C08F 6/24, C08F 6/10

(54) **VERFAHREN ZUM HERSTELLEN VON WÄSSRIGEN POLYMERDISPERSIONEN MIT SEHR NIEDRIGEN RESTMONOMERGEHALTEN UND DEREN VERWENDUNG**
METHOD FOR THE PRODUCTION OF AQUEOUS POLYMER DISPERSIONS CONTAINING VERY FEW RESIDUAL MONOMERS AND USE THEREOF
PROCEDE POUR PRODUIRE DES DISPERSIONS POLYMERES AQUEUSES PRESENTANT DE TRES FAIBLES TENEURS EN MONOMERES RESIDUELS ET LEUR UTILISATION

(30) Priorität: 07.09.2002 DE 10241481
(43) Veröffentlichungstag der Anmeldung: 15.06.2005
(73) Patentinhaber: Celanese Emulsions GmbH, 61476 Kronberg/Ts. (DE)
(72) Erfinder: MÜLLER, Harmin, 65719 Hofheim (DE); JAKOB, Martin, 65779 Kelkheim (DE); HELDMANN, Carsten, 61137 Schöneck (DE); WIRTH, Thomas, 63512 Hainburg (DE)
(74) Vertreter: Ackermann, Joachim
(86) Internationale Anmeldenummer: PCT/EP2003/008266
(87) Internationale Veröffentlichungsnummer: WO 2004/022609

(56) Entgegenhaltungen:
- EP-A- 1 199 315
- EP-A- 1 199 316
- US-A- 5 087 676

## Beschreibung

Die Erfindung betrifft ein Verfahren zur Verminderung der Restmonomerenmenge in wässrigen Polymerdispersionen durch chemische Nachbehandlung.

Wässrige Polymerdispersionen enthalten nach ihrer Herstellung durch radikalische Emulsionspolymerisation oder Copolymerisation neben einem Polymer-Feststoffanteil von 30 bis 75 Gew.-% auf Grund der unvollständigen Polymerisation der eingesetzten Monomeren in der radikalischen Hauptpolymerisation, die meist bis zu einem Monomerenumsatz von 95 und bevorzugt von 98 bis 99 Gew.-% geführt wird, noch einen unerwünschten Anteil an nicht polymerisierten freien Monomeren ("Restmonomere") und ggf. weiterer flüchtiger nicht-wässriger Bestandteile. Aus ökologischen Gründen fordert der Markt bei Klebstoff-, Anstrich- und Baustoffprodukten, bei gleichen Verarbeitungs- und Anwendungseigenschaften solche wässrige Polymersysteme bereitzustellen, die einen möglichst niedrigen Gehalt an Restmonomeren, der zum Gesamt-VOC-Gehalt der Dispersion beiträgt (VOC = volatile organic compounds), enthalten.

Bei physikalischen Methoden, wie zum Beispiel dem sogenannten "Strippen", bei dem gasförmiger Stickstoff durch die Dispersion hindurchgeleitet wird, oder z.B. der Wasserdampfdestillation, besteht die Gefahr der Koagulat- und Belagsbildung. Außerdem sind diese Methoden oft mit einem hohen Zeitaufwand und Kosten verbunden und damit unwirtschaftlich. Zudem sind speziell höher viskose Dispersionen bekanntermaßen sehr schwierig physikalisch zu entmonomerisieren.

Neben physikalischen Methoden stehen unterschiedliche chemische Methoden zur Absenkung von Restmonomerengehalten wässriger Polymerdispersionen zur Verfügung. Diese umfassen häufig eine der eigentlichen Emulsionspolymerisation nachgeschalteten Stufe mittels spezieller Redox-Initiatorsysteme. Ein dem Fachmann bekannter Nachteil ist der speziell bei hochviskosen Dispersionen ein mit der chemischen Entmonomerisierung einhergehender Abbau der Viskosität, der vielfach unerwünscht ist.

Systeme zur chemischen Entmonomerisierung finden sich in der Patentliteratur.

So offenbart beispielsweise die DE-A 198 39 199 die Verminderung der Restmonomerenmenge in wässrigen Polymerdispersionen durch Nachbehandeln mit einem Hydroperoxid und/oder einer Wasserstoffperoxid freisetzenden Verbindung, einem Aldehyd R²CHO (z.B. Acetaldehyd) in Kombination mit einem anorganischen Dithionit (z.B. Natriumdithionit) sowie katalytischen Mengen eines mehrwertigen Matallions, z.B. Salze von Fe²⁺. Im Redoxsystem wird bevorzugt Wasserstoffperoxid als Oxidationsmittel eingesetzt, aber auch Kaliumperoxid, Natriumperoxid, sowie weitere in wässrigem Medium Wasserstoffperoxid bildende Vorstufen. Erwähnt ist auch die Verwendung organischer Hydroperoxide.

Die DE-A 199 42 776 der gleichen Anmelderin beschreibt ein Verfahren der Verminderung des Restmonomerengehaltes in wässrigen Dispersionen durch Nachbehandeln mit einem Hydroperoxid bzw. einer Wasserstoffperoxid freisetzenden Verbindung und einer Carbonylverbindung (R²(C=O)R³ mit R² = H, Alkyl u.a. und R³ = -CO₂M, SO₃M u.a.) in Kombination mit einem anorganischen Dithionit sowie katalytischen Mengen eines mehrwertigen Matallions, z.B. Salze von Fe²⁺.

In der DE-A 197 43 759 wird die Herstellung und Verwendung einer neuen Klasse von Sulfinsäurederivaten vorgestellt. Sie besitzen die folgende Struktur:
MO-SO-CR¹R²R³ mit M = Na, K, NH₄, Mg, Ca, Zn, R¹ = OH, NH₂, R² = COOM, COOR, CONR₂, R³ = H, Alkyl, Alkenyl, Cycloalkyl, Aryl. Beansprucht wird die Verwendung der Sulfinsäurederivate als Co-Katalysator bei der Emulsionspolymerisation. Ziel dieser Verwendung ist es, Sulfinsäurederivate zur Verfügung zu stellen, deren chemische Eigenschaften möglichst ähnlich denen der Formaldehydsulfoxylate sind, die aber während und nach der Anwendung kein Formaldehyd abspalten. Aus dieser Schrift sind keine Hinweise zu entnehmen, dass mit den erfindungsgemäßen Reduktionsmitteln sehr niedrige Restmonomergehalte beim Einsatz in einer Redox-Nachbehandlung zu erwarten sind.

In Research Disclosure 1983/November 2000 (439062) werden Sulfinsäurederivate für die Emulsionspolymerisation und speziell zur Nachbehandlung zur Reduzierung der Restmonomerengehalte vorgestellt. Diese Reduktionsmittel werden zur Bereitstellung formaldehydfreier und verfärbungsarmer Dispersionen vorgeschlagen. Sie besitzen die folgende Struktur: MO-SO-CR¹R²R³ mit M = Na, K, NH₄, Mg, Ca, Zn, R¹ = OH, NH₂, R² = COOM, COOR, CONR2, R³ = H, Alkyl, Alkenyl, Cycloalkyl, Aryl. Als Oxidationskomponenten werden Wasserstoffperoxid, Persulfat, t-Butylhydroperoxid oder Di-t-butylperoxid oder Kombinationen davon empfohlen.
Zusätzlich wird ein Metallsalz (Fe u.a.) als Katalysator eingesetzt. Perester, Perketale und Percarbonate werden nicht erwähnt.

EP-A-1 201 685 beschreibt den Einsatz eines Redoxinitiatorsystems zur Herstellung von Dispersionen mit niedrigem Formaldehydgehalt enthaltend Copolymere aus Vinylacetat und N-Methylolacrylamid. Als Reduktionsmittel werden Verbindungen der Struktur MO(SO)-CR¹R²R³ mit M = H, NH₄, einwertiges Metallion, R¹ = OH oder NR⁴R⁵, mit R⁴ und R⁵ jeweils H oder C₁-C₆-Alkyl, R²= H, Alkyl, Alkenyl, Cycloalkyl, Aryl, R³ = CO₂M. Hinweise auf niedrige Restmonomergehalte bei Verwendung der erfindungsgemäßen Reduktionsmittel beim Einsatz in einer Redox-Nachbehandlung werden nicht gegeben.

EP-A-1 199 315 beschreibt den Einsatz eines Redoxsystems für die Herstellung und Nachbehandlung von Polymerdispersionen aus einem Gemisch aus einer wasserlöslichen und einer wasserunlöslichen Oxidationskomponente und einer Sulfinsäure, bzw. deren Salz. Die Beispiele lehren, dass die alleinige Verwendung eines wasserunlöslichen Oxidationsmittels in Kombination mit dem Sulfinsäurederivat (Comp. Ex. B) zu schlechteren Restmonomer- und VOC-Gehalten führt.

EP-A-1 199 316 beschreibt den Einsatz eines nicht Formaldehyd-bildenden Radikalredoxinitiatorsystems für die Herstellung und Nachbehandlung von Polymerdispersionen, das t-Alkylhydroperoxid, t-Alkylperoxid oder t-Alkylperester beinhaltet, wobei die t-Alkylgruppe mindestens 5 C-Atome besitzt, und einer "nichtformaldehydfreisetzenden" Reduktionskomponente, wie Isoascorbinsäure, Natriummetabisulfit, Natriumbisulfit, Natriumdithionit sowie Natrium-2-hydroxy-2-sulfinatoessigsäure. Der vorteilhafte Effekt hinsichtlich des Formaldehydgehaltes ergibt sich aus der Verwendung von t-Alkylperestern als Oxidationsmittel, die t-Amylanstatt t-Butylgruppen als Alkylgruppe enthalten.

Vorteilhafte Effekte bzgl. der besonderen Effizienz der Restmonomerreduktion mit den erwähnten Kombinationen an Oxidations- und Reduktionskomponenten werden nicht offenbart. Zusätzlich sind die Rohstoffkosten für t-Amyl-Gruppen enthaltende Oxidationsmittel deutlich höher als die der korrespondierenden t-Butyl-Verbindungen.

Die WO 00/22003 beschreibt einen Prozess zur Emulsionspolymerisation, bei dem ein Polymerisationsinitiator, bei dem es sich nicht um ein Hydroperoxid handelt, mit einem Reduktionsmittel zusammengebracht wird, um in einem "initial cold start-temperature"-Verfahren eine Verkürzung der Prozessdauer zu erreichen. Zum Einsatz kommen Reduktionsmitteln wie Natriumformaldehydsulfoxylat, Ascorbinsäure, Natriumbisulfit, Natriummetabisulfit und Natriumdithionit. Darüber hinaus werden als Reduktionskomponenten auch Zucker und Aldehyde wie Glutaraldehyd empfohlen. Das besonders bevorzugte Reduktionsmittel ist Natriumformaldehydsulfoxylat. Es finden sich weder Hinweise hinsichtlich der Formaldehyd-Freiheit, der Verfärbungstendenz (Verwendung durch Ascorbinsäure) noch einer besonderen Effizienz der Restmonomerreduktion mit den erwähnten Kombinationen an Oxidations- und Reduktionskomponenten. Bei diesem Verfahren handelt es sich aber nicht um die Nachbehandlung einer fertigen Polymerdispersion, sondern um den Einsatz des Redoxsystems als Initiator zum Start der Emulsionspolymerisation.

US-A-5,886,140 beschreibt ein Verfahren zur Verminderung des Restmonomerengehaltes in wässrigen Dispersionen durch chemische Nachbehandlung mit einem Redoxsystem, wobei als Reduktionsmittel Komplexe aus Zinksulfoxylat und Formol (Formalin), reduzierende Zucker oder deren Säurederivate und C₅-C₄-Carbonsäuren zum Einsatz kommen. Als Oxidationskomponente werden Hydroperoxide, Peroxide, Peroxidicarbonate oder Peroxyester sowie ausgewählte Mischungen dieser Komponenten mit anorganischen Persulfaten eingesetzt. Die Verwendung formaldehydfreier Sulfinsäurederivate als Reduktionsmittel wird nicht erwähnt.

Keine der zitierten Druckschriften gibt Hinweise darauf, dass mit den dort beschriebenen Redoxsystemen vergilbungsarme Dispersionen in Kombination mit besonders niedrigen Restmonomergehalten durch Redoxmittel erreichbar sind, die zu keinem zusätzlichen Eintrag von Formaldehyd in die Dispersion führen. Vor allem finden sich keine Hinweise hinsichtlich einer Eignung der beschriebenen Redoxsysteme zur Entmonomerisierung höherviskoser Dispersionen.

Der vorliegenden Erfindung lag daher die Aufgabe zugrunde, ein neues und wirksames Verfahren zur besonders effizienten Verminderung der Restmonomerenmenge in wässrigen Polymerdispersionen bereitzustellen, wobei die damit verbundenen, bekannten Nachteile wie die Vergilbung, den Formatdehydeintrag durch die Nachbehandlung und die Bildung von Koagulat auf ein Minimum reduziert werden sollen. Außerdem soll die Erfindung leicht technisch nutzbar sein und auch bei höherviskosen Dispersionen ohne gravierenden Viskositätsabfall anwendbar sein.

Überraschend wurde gefunden, dass diese Aufgabe gelöst wird durch ein Verfahren zur Verminderung der Menge an Restmonomeren in wässrigen Polymerdispersionen, bei dem man eine Nachbehandlung der Restmonomere enthaltenden wässrigen Polymerdispersionen unter Zugabe eines Redoxsystems bei Temperaturen im Bereich von 30°C bis 100°C durchführt, das aus Komponenten a) b) rund gegebenenfalls c) besteht, wobei
a) aus 0,005 bis 5 Gew.-%, bezogen auf das Gesamtgewicht aller zur Herstellung der Polymerdispersion verwendeten Monomeren, mindestens eines Oxidationsmittels auf Basis eines organischen Peroxides aus der Klasse der
   a1) Perester nach Anspruch 1 und/oder
   a2) der Percarbonate nach Anspruch 1 und/oder
   a3) der Perketale nach Anspruch 1 besteht,
   sowie
b) aus 0,005 bis 5 Gew.-%, bezogen auf das Gesamtgewicht aller zur Herstellung der Polymerdispersion verwendeten Monomeren, mindestens eines Reduktionsmittels aus der Gruppe der Sulfinsäuren oder deren Salzen mit der Struktur

   MO-SO-CR¹²R¹³R¹⁴ (2)

   besteht, das gegebenenfalls noch Sutfonsäurederivate, die kein Formaldehyd abspalten können und/oder Natriumsulfit aufweisen kann, worin
   M = H, NH₄, ein einwertiges Metallion oder ein Äquivalent eines zweiwertigen Metallions der Gruppen Ia, IIa, IIb, IVa oder VIIIb des Periodensystems ist,
   R¹²= OH, NR¹⁵R¹⁶ bedeutet, mit R¹⁵, R¹⁶ = H oder C₁-C₆-Alkyl,
   R¹³ = H, Alkyl-, Alkenyl-, Cycloalkyl- oder Arylgruppe bedeutet, wobei diese Gruppen 1, 2 oder 3 Substituenten aufweisen können, die unabhängig voneinander ausgewählt sind unter C₁-C₆-Alkyl, OH, O-C₁-C₆-Alkyl, Halogen und CF₃,
   R¹⁴ = COOM, SO₃M, COR¹⁵, CONR¹⁵R¹⁶, COOR¹⁵ bedeutet, wobei M, R¹⁵ und R¹⁶ die oben angegebenen Bedeutungen besitzen oder, wenn R¹³ für Aryl steht, das gegebenenfalls 1, 2 oder 3 Substituenten aufweist, die unabhängig voneinander ausgewählt sind aus C₁-C₆-Alkyl, OH, O-C₁-C₆-Alkyl, Halogen und CF₃, dann R¹⁴ auch für H steht, und die Salze davon, und
c) gegebenenfalls aus katalytischen Mengen eines mehrwertigen Metallions, das in mehreren Wertigkeitsstufen auftreten kann.

Das Oxidationsmittel des Redoxsystems für das erfindungsgemäße Verfahren soll in der Lage sein, Radikale zu bilden. Im Redoxsystem werden
a1) Perester eingesetzt, die ausgewählt werden aus der Gruppe t-Butylperbenzoat, t-Butylperoxy-3,5,5-trimethylhexanoat und t-Butylperoxy-2-ethylhexanoat, ganz besonders bevorzugt t-Butylperbenzoat als Oxidationsmittel eingesetzt, aber auch, Cumylperoxyneodecanoat, 1,1,3,3-Tetramethylbutylperaxyneodecanoat, t-Butylperoxyneodecanoat, 1,1,3,3-Tetramethylbutylperoxypivalat, t-Butylperoxyneoheptanoat, t-Amylperoxypivalat, t-Butylperoxypivalat, 1,1,3,3-Tetramethylbutylperoxy-2-ethylhexanoat, t-Amylperoxy-2-ethylhexanoat, t-Butylperoxydiethylacetat, t-Butylperoxyisobutyrat, t-Butylperoxyacetat, t-Amylperoxybenzoat, oder
a2) Percarbonate, die ausgewählt werden aus der Gruppe 1-(2-Ethylhexanoylperoxy)-1,3-dimethylbutylperoxypivalat, Di(2-ethylhexyl)peroxydicarbonat, 2,5-Dimethyl-2,5-di(2-ethylhexanoylperoxy)hexan, t-Amylperoxy 2-ethylhexylcarbonat, t-Butylperoxy isopropyl carbonat, t-Butylperoxy 2-ethylhexyl carbonat oder
a3) Perketale, die ausgewählt werden aus der Gruppe 1,1-Di(tert-butylperoxy)-3,3,5-trimethylcyclohexan, 2,2-Di(4,4-di(tert-butylperoxy)cyclohexyl)propan, 1,1-Di(tert-butylperoxy)cyclohexan, 2,2-Di(tert-butylperoxy)butan, 3,6,9-Triethyl-3,6,9-trimethyl-1,4,7-triperoxonan.

Es ist jedoch auch möglich, Gemische verschiedener der genannten Oxidationsmittel einzusetzen. Im Rahmen der betrieblichen Praxis ist es selbstverständlich möglich, die hydrophoben Peroxidkomponenten aus Gründen der Verfahrenssicherheit in Form einer wässrigen Emulsion, die mit oberflächenaktiven Substanzen bzw. polymeren Stabilisatoren stabilisiert ist, einzusetzen.

Die Menge an zugesetztem Oxidationsmittel liegt üblicherweise im Bereich von 0,005 bis 5 Gew.-%, bevorzugt von 0,02 bis 3 Gew.-%, besonders bevorzugt von 0,02 bis 2 Gew.-%, ganz besonders bevorzugt von 0,05 bis 1 Gew.-%, insbesondere von 0,05 bis 0,5 Ges.-%, bezogen auf das Gesamtgewicht aller Monomeren.

Das Reduktionsmittel des Redoxsystems für das erfindungsgemäße Verfahren ist unter b) beschrieben. Im Rahmen der Beschreibung und der Ansprüche der vorliegenden Anmeldung besitzen die nachfolgend aufgeführten Ausdrücke bzgl. der Reste für die Reduktionsmittelkomponente (2) folgende Bedeutungen:
Alkyl in den Verbindungen der Komponente b) steht für gradkettige oder verzweigte Alkylgruppen, die vorzugsweise 1 bis 6, insbesondere 1 bis 4, C-Atome aufweisen. Beispiele für Alkylgruppen sind Methyl, Ethyl, n-Propyl, Isopropyl, n-Butyl, t-Butyl, n-Hexyl etc.. Entsprechendes gilt für die Alkylgruppen in O-Alkyl.
Alkenyl in den Verbindungen der Komponente b) steht für gradkettige oder verzweigte Alkenylgruppen, die vorzugsweise 3 bis 8 C-Atome, insbesondere 3 bis 6 C-Atome aufweisen. Eine bevorzugte Alkenylgruppe z.B. ist die Allylgruppe.
Cycloalkyl in den Verbindungen der Komponente b) steht insbesondere für C₃-C₆-Cycloalkyl, wobei Cyclopentyl und Cyclohexyl besonders bevorzugt sind.
Aryl in den Verbindungen der Komponente b) (auch in Aralkyl) steht vorzugsweise für Phenyl oder Naphthyl. Wenn der Arylrest für eine Phenylgruppe steht und substituiert ist, so weist er vorzugsweise zwei Substituenten auf. Diese sind insbesondere in 2- und/oder 4-Stellung vorhanden.
Halogen steht für F, Cl, Br und I, vorzugsweise für Cl und Br.
M steht vorzugsweise für ein Ammonium-, Alkalimetall- oder ein Äquivalent eines Erdalkalimetall- oder Zinkions.

Geeignete Alkalimetallionen sind insbesondere Natrium- und Kaliumionen, geeignete Erdalkalimetallionen sind vor allem Magnesium- und Calciumionen.
R¹² steht vorzugsweise für eine Hydroxy- oder Aminogruppe.
R¹³ steht vorzugsweise für ein Wasserstoffatom oder eine Alkyl- oder Arylgruppe, die wie oben substituiert sein kann. Vorzugsweise weist sie einen oder zwei Hydroxy-und/oder Alkoxysubstituenten auf.
R¹⁴ steht vorzugsweise entweder für COOM oder COOR¹⁵ (M und R¹⁵ besitzen die oben angegebenen Bedeutungen) oder, wenn R¹³ für Aryl steht, das wie oben angegeben substituiert sein kann, auch für ein Wasserstoffatom.

Eine bevorzugte Ausführungsform sind Verbindungen der Formel (2), worin M für ein Alkalimetallion oder ein Äquivalent eines Erdalkalimetall- oder Zinkions steht;
R¹² für eine Hydroxy- oder Aminogruppe steht;
R¹³ für H oder Alkyl steht; und
R¹⁴ für COOM oder COOR¹⁵ steht, wobei M für H, ein Alkalimetallion oder ein Äquivalent eines Erdalkalimetallions steht und R¹⁵ für C₁-C₆-Alkyl steht.

Eine weitere bevorzugte Ausführungsform sind Verbindungen der Formel (2), worin M für ein Alkalimetallion oder ein Äquivalent eines Erdalkalimetall- oder Zinkions steht;
R¹² für eine Hydroxy- oder Aminogruppe steht;
R¹³ für gegebenenfalls wie oben angegeben substituiertes Aryl, insbesondere für Hydroxyphenyl oder C₁-C₄-Alkoxyphenyl, steht; und
R¹⁴ für ein Wasserstoffatom steht.

Beispiele für solche Verbindungen sind:
2-Hydroxyphenyl-hydroxymethylsulfinsäure oder deren Natriumsalz,
4-Methoxyphenyl-hydroxymethylsulfinsäure oder deren Natriumsalz,
2-Hydroxy-2-sulfinatoessigsäure oder deren Dinatrium- oder Zinksalz und
2-Hydroxy-2-Sulfinatopropionsäure oder deren Dinatriumsalz.

Die vorbeschriebenen Verbindungen können in Reinsubstanz oder in Form technischer Mischungen eingesetzt werden. Darunter fallen beispielsweise Mischungen aus oben genannten Sulfinsäurederivaten mit z.B. Natriumsulfit und/oder Sulfonsäurederivaten, die kein Formaldehyd abspalten können, wie ^{®}Brüggolit FF06 der Firma Brüggemann. Der Einsatz dieser Verbindungen ist besonders bevorzugt. ^{®}Brüggolit FF06 entspricht 2-Hydroxy-2-sulfinatessigsäuredinatriumsalz bzw. eine Mischung aus 2-Hydroxy-2-sulfinatessigsäuredinatriumsalz mit Natriumsulfit und 2-Hydroxy-2-sulfonatessigsäuredinatriumsalz. Ein besonders geeignetes Mischungsverhältnis ist: 2-Hydroxy-2-sulfinatessigsäuredinatriumsalz in einer Menge von 50 bis 60 Gew.-%, Natriumsulfit in einer Menge von 30 bis 35 Gew.-% und 2-Hydroxy-2-sulfonatessigsäuredinatriumsalz in einer Menge von 10 bis 15 Gew.-%, bezogen auf das Gesamtgewicht der Mischung. Es sind aber im Prinzip auch andere Mischungsverhältnisse möglich.

Die Menge an zugesetztem Reduktionsmittel liegt üblicherweise im Bereich von 0,005 bis 5 Gew.-%, bevorzugt von 0,02 bis 3 Gew.-%, besonders bevorzugt von 0,02 bis 2 Gew.-%, ganz besonders bevorzugt von 0,05 bis 1 Gew.-%, insbesondere von 0,05 bis 0,5 Gew.-%, bezogen auf das Gesamtgewicht aller Monomeren. Auch höhere Mengen an Reduktionsmittel sind möglich, wirtschaftlich aber weniger sinnvoll.

Die für die Nachbehandlung gegebenenfalls eingesetzten und vorteilhaften Metallverbindungen sind üblicherweise vollständig im wässrigen Medium der Polymerdispersion löslich und deren metallische Komponente darüber hinaus in der Lage, in mehreren Wertigkeitsstufen vorliegen zu können. Die gelösten Metallionen wirken katalytisch und unterstützen die Elektronenübertragungsreaktionen zwischen den eigentlich wirksamen Oxidations- und Reduktionsmitteln. Als gelöste Metallionen kommen prinzipiell Eisen-, Kupfer-, Mangan-, Vanadin-, Nickel-, Cobalt-, Titan-, Cer-oder Chromionen in Betracht. Selbstverständlich ist es auch möglich, Gemische verschiedener, sich nicht störender Metallionen, wie beispielsweise das System Fe^{2/3+}/VS0₄⁻, zu verwenden. Bevorzugt werden Eisenionen eingesetzt.

Die gelösten Metallionen werden gegebenenfalls in katalytischen Mengen, im Bereich von 1 bis 1000, bevorzugt von 5 bis 500 und besonders bevorzugt von 10 bis 120 ppm, bezogen auf das Gesamtgewicht aller Monomeren, verwendet.

Das erfindungsgemäße Verfahren eignet sich besonders zur Verminderung der Restmonomerenmenge in wässrigen Polymerdispersionen, die durch radikalische Emulsionspolymerisation von wenigstens eine ethylenisch ungesättigte Gruppe aufweisenden Monomeren erhältlich sind.

Als wenigstens eine monoethylenisch ungesättigte Gruppe aufweisende Monomere kommen für das erfindungsgemäße Verfahren u.a. insbesondere in einfacher Weise radikalisch polymerisierbare Monomere in Betracht, wie beispielsweise
aromatische oder aliphatische α-β-ungesättigte, gegebenenfalls halogensubstituierte Kohlenwasserstoffe (Ethen, Propen, 1-Buten, 2-Buten, Vinylchlorid, Vinylidenchlorid, Styrol, α-Methylstyrol, o-Chlorstyrol, wobei Ethen und Styrol bevorzugt sind, oder

Ester aus Vinylalkohol und 1 bis 18 C-Atome aufweisenden Monocarbonsäuren, wie Vinylacetat, Vinylpropionat, Vinyl-n-butyrat, Vinyllaurat, Vinylstearat und Versaticsäurevinylester,

Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -isobutyl und -2-ethylhexylester, Maleinsäuredimethylester oder Maleinsäure-di-n-butylester, Nitrile α,β-monoethylenisch ungesättigter Carbonsäuren, wie Acrylnitril sowie

C₄₋₈-konjugierte Diene, wie 1,3-Butadien und Isopren. Die genannten Monomere bilden im Fall von ausschließlich nach der Methode der radikalischen wässrigen Emulsionspolymerisation erzeugten wässrigen Polymerisatdispersionen in der Regel die Hauptmonomeren, die, bezogen auf die Gesamtmenge der nach dem Verfahren der radikalischen wässrigen Emulsionspolymerisation zu polymerisierenden Monomeren normalerweise einen Anteil von mehr als 50 Gew.-% auf sich vereinen. In aller Regel weisen diese Monomeren in Wasser bei Normalbedingungen (25°C, 1 atm) lediglich eine mäßige bis geringe Löslichkeit auf.

Monomere, die unter den vorgenannten Bedingungen eine erhöhte Wasserlöslichkeit aufweisen, sind beispielsweise α,β-monoethylenisch ungesättigte Mono- und Dicarbonsäuren und deren Amide, wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon.

Im Fall von ausschließlich nach der Methode der radikalischen wässrigen Emulsionspolymerisation erzeugten wässrigen Polymerisatdispersionen werden die vorgenannten, eine erhöhte Wasserlöslichkeit aufweisenden Monomeren im Normalfall lediglich als modifizierende Monomere in Mengen, bezogen auf die Gesamtmenge der zu polymerisierenden Monomeren, von weniger als 50 Gew.-%, in der Regel 0,5 bis 20, vorzugsweise 1 bis 10 Gew.-% einpolymerisiert.

Monomere, die üblicherweise die innere Festigkeit der Verfilmungen der wässrigen Polymerisatdispersionen erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren, unter denen das N-Methylolacrylamid und das N-Methylolmethacrylamid ganz besonders bevorzugt sind sowie deren Ester mit 1 bis 4 C-Atomen aufweisen den Alkanolen. Daneben kommen auch zwei Vinylreste aufweisende Monomere, zwei Vinylidenreste aufweisende Monomere sowie zwei Alkenylreste aufweisende Monomere in Betracht. Besonders vorteilhaft sind dabei die Di-Ester zweiwertiger Alkohole mit α,β-monoethylenisch ungesättigten Monocarbonsäuren unter denen die Acryl und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylate sowie Divinylbenzol, Vinylmethacrylat, Vinylacrylat, Allylmethacrylat, Allylacrylat, Diallymaleat, Diallylfumarat, Methylenbisacrylamid, Cyclopentadienylacrylat oder Triallylcyanurat. In diesem Zusammenhang von besonderer Bedeutung sind auch die Methacrylsäure- und Acrylsäure-C₁-C₉-Hydroxyalkylester, wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Außerdem können auch siliziumorganische Monomere der allgemeinen Formel RSi(CH₃)₀₋₂(OR¹)₃₋₁, wobei R die Bedeutung CH₂= CR²-(CH₂)₀₋₁ oder CH₂= CR²CO₂-(CH₂)₁₋₃ hat, R¹ ein unverzweigter oder verzweigter, gegebenenfalls substituierter Alkylrest mit 3 bis 12 C-Atomen ist, der gegebenenfalls durch eine Ethergruppe unterbrochen sein kann, und R² für H oder CH₃ steht. Beispiele hierfür sind Vinylmethyl-dimethoxy-silan, Vinylmethyl-diethoxy-silan, Vinylmethyl-di-n-propoxy-silan, Vinylmethyl-di-isopropoxy-silan, Vinylmethyl-di-n-butoxy-silan, Vinylmethyl-di-sec.-butoxy-silan, Vinylmethyl-di-tert-butoxy-silan, Vinylmethyl-di-(2-methoxy-isopropyloxy)-silan und Vinylmethyl-dioctyloxy-silan. Die vorgenannten Monomeren werden im Fall von ausschließlich nach der Methode der radikalischen wässrigen Emulsionspolymerisation erzeugten wässrigen Polymerisatdispersionen, bezogen auf die Gesamtmenge der zu polymerisierenden Monomeren, meist in Mengen von 0,5 bis 10 Ges.-% einpolymerisiert.

Die Komponenten des für das erfindungsgemäße Verfahren verwendeten Redoxsystems werden zweckmäßigerweise zur Nachbehandlung der auf eine Temperatur im Bereich von 30 bis 100°C, bevorzugt von 30 bis 90°C und besonders bevorzugt von 30 bis 85°C erhitzten Polymerdispersion, bevorzugt unter Normaldruck, gegebenenfalls aber auch bei einem Druck von größer oder kleiner 1 bar (absolut), unter Rühren gleichzeitig oder nacheinander zugegeben. Die erfindungsgemäßen Komponenten des Redoxsytems können nach beendeter Polymerisation entweder dosiert, in Form einer oder mehrerer Portionen hinzugefügt werden. Die Zeit für die Dosierung, die Zugabe der Portion(en) und die Zeit zwischen der/den Zugaben hängt von der chemischen Zusammensetzung der Dispersion, der Größe des Reaktionsansatzes, der Reaktorgeometrie sowie der Halbwertszeit des verwendeten Redoxsystems ab. Abhängig von der gestellten Aufgabe, kann die Zeitdauer der Zugabe des Redoxsystems wenige Sekunden bis mehrere Stunden betragen. Es hat es sich als zweckmäßig herausgestellt, die Zeitdauer in Vorversuchen zu ermitteln. Die Reihenfolge bei der Zugabe / Dosierung / portionsweisen Zugabe des Oxidations- und Reduktionsmittel wird zweckmäßigerweise in Vorversuchen ermittelt, wobei alle Kombination im erfindungsgemäßen Verfahren zulässig sind. In einer bevorzugten Ausführungsform wird zuerst das Oxidationsmittel zugesetzt und anschließend das Reduktionsmittel hinzugegeben.

Die Dosierung kann von oben, unten oder von der Seite erfolgen. Besonders bevorzugt wird mindestens eine Komponente entweder dosiert oder portionsweise hinzugegeben. Ganz besonders bevorzugt wird das Reduktionsmittel dosiert.

Die Metallsalzlösung kann an verschiedenen Zeitpunkten der Redoxnachbehandlung zugegeben werden. Bevorzugt ist die Ausführungsform, bei der das Reduktionsmittel das Metallsalz bereits enthält.

Die erfindungsgemäße Nachbehandlung wird üblicherweise bei einem pH-Wert im Bereich von kleiner/gleich 9 durchgeführt. Zur Einstellung des pH-Wertes der Polymerdispersion können prinzipiell Basen, wie beispielsweise Natronlauge, Ammoniakwasser oder Triethanolamin verwendet werden. Für die Nachbehandlung der Polymerdispersion ist ein pH-Bereich von 2 bis 9 günstig, erfindungsgemäß bevorzugt ist ein pH-Wert im Bereich zwischen 3 und 9.

Vorteilhaft für das erfindungsgemäße Verfahren sind Dispersionen mit Viskositäten > 100 mPa·s, bevorzugt sind Dispersionen > 1000 mPa·s, besonders bevorzugt sind Dispersionen > 2000 mPa·s, ganz besonders bevorzugt sind Dispersionen > 5000 mPa·s ohne dass ein signifikanter Viskositätsabbau stattfindet.
Die Herstellung wässriger Polymerdispersionen ist vielfach vorbeschrieben und dem Fachmann daher bekannt [vgl. z.B. Encyclopedia of Polymer Science and Engineering, Vol. 8, S. 659 ff (1987)]. Sie erfolgt durch Emulsionspolymerisation von wenigstens eine olefinisch ungesättigte Gruppe aufweisenden Monomeren in Gegenwart eines bevorzugt wasserlöslichen Polymerisationsinitiators sowie in Gegenwart von Emulgatoren und ggf. Schutzkolloiden und üblichen weiteren Zusatzstoffen. In der Regel erfolgt hierbei der Zusatz der Monomeren durch kontinuierlichen Zulauf. Als Initiator ist die Verwendung von Peroxodischwefelsäure und/oder deren Salzen in Mengen von 0,1 bis 2 Gew.-%, bezogen auf die Gesamtmenge der Monomeren, bevorzugt. Die Polymerisationstemperatur beträgt im allgemeinen 20 bis 150 und bevorzugt 60 bis 120°C. Die Polymerisation findet ggf. unter Druck statt. Als Emulgatoren werden insbesondere anionische Emulgatoren allein oder im Gemisch mit nichtionischen Dispergiermitteln in einer Menge von insbesondere 0,5 bis 6 Gew.-% der Gesamtmonomerenmenge eingesetzt.
Die erfindungsgemäße Nachbehandlung der wässrigen Polymerdispersion zur Verminderung der Restmonomerenmenge erfolgt insbesondere, nachdem die Gesamtmonomerenmenge in der radikalischen Emulsionspolymerisation zu mindestens 95 % und bevorzugt zu mindestens 98 bis 99 Gew.-% umgesetzt wurde. Selbstverständlich ist es möglich, die für die Nachbehandlung vorgesehenen wässrigen Polymerdispersionen einem physikalischen Prozess (z.B. Inertgas-und/oder Wasserdampfstrippen) vorher, parallel oder nachher zuzuführen. Die erfindungsgemäß einzusetzenden radikalischen Redoxsysteme ermöglichen eine wirksame Verminderung der Menge an Restmonomer in relativ kurzer Zeit.
Die mit dem erfindungsgemäßen Redoxsystem nachbehandelten Dispersionen weisen in hervorragender Weise besonders niedrige Restmonomer- und Formaldehydgehalte auf. Daneben zeigen sie keine Neigung zur Vergilbung.

Daher sind die mit dem erfindungsgemäßen Redoxsystem nachbehandelten Dispersionen in besonderer Weise geeignet zur Herstellung von Beschichtungsmitteln (u.a. Farben, Lebensmittelbeschichtungen), Klebstoffen (Holz, Papier, Kunststofffolien) und bauchemischen Produkten sowie für die Veredlung von Textilien und Papier. Die erfindungsgemäßen Dispersionen können ebenfalls vorteilhafterweise durch Sprühtrocknung in Pulver mit niedrigen VOC-Gehalten überführt werden, die in bauchemischen Produkten und Klebstoffen eingesetzt werden.

### Beispiele

### Herstellung der Basisdispersion für Beispiel 1:

In einem 10 I Glasrührkesselreaktor mit Ankerrührer, der mit Zulaufmöglichkeiten, Rückflusskühler, Mantelheizung und -kühlung sowie Stickstoffanschluss versehen war, wurde eine Lösung von 400 g teilverseifter Polyvinylalkohol vom Hydrolysegrad 88 Mol-% (Polyvinylalkohol einer Viskosität der 4 %igen wässrigen Lösung von 18 mPa·s) in 3510 g entionisiertem Wasser hergestellt. Nach Zugabe von 5,5 g Natriumactetat wasserfrei und von 3,5 g Entschäumungsmittel (^{®}Agitan 280, Münzing-Chemie) und Spülen mit Stickstoff wurden während des Aufheizens 0,17 g ^{®}Rongalit in 12,8 g Wasser hinzugegeben. Bei einer Innentemperatur von 57°C wurden 350 g Vinylacetat einemulgiert. Die Innentemperatur wurde auf 60 °C angehoben und die Polymerisation nach Zugabe einer Lösung von 0,16 g tert-Butylhydroperoxid (70 %ig, ^{®}Trigonox AW 70, Akzo-Chemie) und 12,8 g Wasser gestartet. Bei einer Innentemperatur von 67°C wurde mit der 3-stündigen linearen und gleichzeitigen Dosierung von 3650 g Vinylacetat, einer Initiatorlösung 1 aus 1,45 g tert.-Butylhydroperoxid (70 %ig, ^{®}Trigonox AW 70, Akzo-Chemie) und 199 g Wasser und aus einer Initiatorlösung 2 aus 1,54 g ^{®}Rongalit C und 167 g Wasser begonnen. Die Manteltemperatur wurde so gewählt, dass bei schwachem Rückfluss die Innentemperatur auf 80°C anstieg und während der gesamten Dosierzeit dort konstant blieb. Nach dem Ende der Dosierzeit wurde über eine Zeitdauer von 1 Stunde bei 80°C nachgeheizt. Die Dispersion wurde dann abgekühlt und für alle weiteren Versuche der Nachbehandlung eingesetzt. Der Feststoffgehalt betrug 52,5 % und die Viskosität 45 000 mPa·s (Brookfield, Spindel 6, 20 rpm, 23°C). Der Restmonomergehalt von Vinylacetat betrug 7300 ppm.

### Durchführung der Nachbehandlung:

Zu 1000 g der Dispersion in einem 2 l Rundkolben wurden Oxidationsmittel a), Reduktionsmittel b) und ggf. Mohr'sche Salzlösung bei einer Temperatur von 60°C in Abständen von 10 min hinzugegeben. Nach Zugabe der letzten Komponente wurde über eine Zeitdauer von 45 min nachgeheizt und mit 1 ml einer 1 %igen Methyletherhydrochinonlösung in Methanol abgestoppt. Die Ansätze wurden anschließend abgekühlt. Die Blindprobe V1 i wurde derselben Heizfolge inklusive der Wasserverdünnung durch Redoxnachgaben aber ohne Redoxnachgaben unterworfen.

Die Ergebnisse sind in der nachfolgenden Tabelle zusammengestellt.

### Beispiel 1 mit Vergleichsbeispielen:

**Tabelle 1a: Stoffmengen der Nachbehandlung**

| Beispiel | Oxidationsmittel | Einwaage Ox. | Stoffmenge Ox. | Reduktionsmittel | Einwaage Red. | Stoffmengen der Reduktionsmittel | | | | Mohrsches Salz |
|---|---|---|---|---|---|---|---|---|---|---|
| | | g / 1000 g Disp. | mmol | | g / 1000 g Disp. | Sulfinat mmol | Sulfonat mmol | Natriumsulfit mmol | gesamt mmol | g (immer 10 ppm) |
| | | | | | in 13 g H₂O | | | | | in 1,6g H2O |
| 1 | ^{®}Trigonox C¹ | 1,00 | 5,15 | ^{®}Brüggolit FF06 | 1,24 | 3,71 | 0,774 | 3,20 | 7,68 | 0,01 |
| (erfindungsgemäß) | | | | | | | | | | |
| V1a | ^{®}Trigonox C | 1,00 | 5,15 | Glyoxyfsäurebisulfitaddukt*2 Na-SalZ² | 1,54 | | 7,697 | | 7,70 | 0,01 |
| V1b | ^{®}Trigonox C | 1,00 | 5,15 | Natriumsulfit | 0,97 | | | 7,70 | 7,70 | 0,01 |
| V1c | ^{®}Trigonox C | 1,00 | 5,15 | Glyoxylsäurebisulfitaddukt*2 Na-Salz + Natriumsulfit¹ | 0,30 + 0,78 | | 1,490 | 6,20 | 7,69 | 0,01 |
| V1d | ^{®}Trigonox C | 1,00 | 5,15 | Natriumsulfit | 0,97 | | | 7,70 | 7,70 | 0,01 |
| V1e | ^{®}Trigonox AW 70⁴ | 0,66 | 5,15 | ^{®}Brüggolit FF06³ | 1,24 | 3,71 | 0,774 | 3,20 | 7,68 | 0,01 |
| V1f | H2O2 | 0,58 | 5,15 | ^{®}Brüggolit FF06 | 1,24 | 3,71 | 0,774 | 3,20 | 7,68 | 0,01 |
| 1b | ^{®}Trigonox C | 1,00 | 5,15 | ^{®}Brüggolit FF06 | 1,24 | 3,71 | 0,774 | 3,20 | 7,68 | 0 |
| (erfindungsgemäß) | | | | | | | | | | |
| V1g | ^{®}Trigonox C | 1,00 | 5,15 | Ascorbinsäure | 1,36 | | | | 7,72 | 0,01 |
| V1h | ^{®}trigonox C | 1,00 | 5,15 | Ascorbinsäure | 1,36 | | | | 7,72 | 0 |
| V1i | ^{®}Trigonox C | 1,00 | 5,15 | ^{®}Brüggolit C⁵ | 0,57 | 3,71 | | | 3,71 | 0,01 |
| V1j | Ausgangsdispersion | | | | | | | | | |
| V1k | ^{®}Trigonox B⁶ | 0,76 | 5,13 | ^{®}Brüggolit FF06³ | 1,24 | 3,71 | 0,774 | 3,20 | 7,68 | 0,01 |

| | | | | | | | | | | |
|---|---|---|---|---|---|---|---|---|---|---|
| V = Vergleichsbeispiele ^{1 ®}Trigonox C der Firma Akzo Nobel ist der Handelsname für tert.-Butylperbenzoat ² Herstellung von Glyoxylsäurebisulfit-addukt*2 Na-Salz: T. M. Olson, M. R. Hoffmann, J. Phys. Chem. 1988, 92, 4246-4253 ^{3 ®}Brüggolit FF06 der Firma Brüggemann ist der Handelsname für das technische Gemisch von 2-Hydroxy-2-sulfinatessigsäuredinatriumsalz in einer Menge von 50 bis 60 Gew.-%, Natriumsulfit in einer Menge von 30 bis 35 Gew.-% und 2-Hydroxy-2-sulfonatessigsäuredinatriumsalz in einer Menge von 10 bis 15 Gew.-%, bezogen auf das Gesamtgewicht der Mischung. ^{4 ®}Trigonox AW 70 der Firma Akzo Nobel ist der Handelsname für tert.-Butylhydroperoxid (70 %ig in Wasser). ^{5 ®}Brüggolit C der Firma Brüggemann ist der Handelsname für Naformaldehydsulfoxylatdihydrat ^{6 ®}Trigonox B der Firma Akzo Nobel ist der Handelsname für Di-tert.-butylperoxid | | | | | | | | | | |

**Tabelle 1b: Ergebnisse der Nachbehandlung**

| Beispiel | Oxidationsmittel | Reduktionsmittel | Mohrsches Salz | Prüfung | Prüfung | Prüfung | Viskosität | Viskositätsabbau |
|---|---|---|---|---|---|---|---|---|
| | | | | ppm Vinylacetat | ppm Formaldeyd | Vergilbung nach 3 Wochen | mPa·s (Brookfield: Spindel: 6 / 20 rpm) | [%] |
| 1 | ^{®}Trigonox C | ^{®}Brüggolit FF 06 | ja | 600 | 20 | nein | 33700 | -0,15 |
| (erfindungsgemäß) | | | | | | | | |
| V1a | ^{®}Trigonox C | Glyoxylsäurebisulfit-addukt*2 Na-Salz¹ | ja | 7000 | 21 | nein | 33200 | -1,63 |
| V1b | ^{®}Trigonox C | Natriumsulfit | ja | 7000 | 22 | nein | 32550 | -3,56 |
| V1c | ^{®}Trigonox C | Glyoxylsäurebisulfit-addukt*2 Na-Salz + Natriumsulfit | ja | 7000 | 22 | nein | 32450 | -3,85 |
| V1d | ^{®}Trigonox C | Natriumsulfit | ja | 7300 | 22 | nein | 30900 | -8.44 |
| V1e | ^{®}Trigonox AW 70 | ^{®}Brüggolit FF 06 | ja | 1200 | 12 | nein | 29200 | -13,5 |
| V1f | H2O2 | ^{®}Brüggolit FF 06 | ja | 5400 | 13 | nein | 23150 | -31,4 |
| 1b | ^{®}Trigonox C | ^{®}Brüggolit FF 06 | nein | 500 | 14 | nein | 34400 | +1,93 |
| (erfindungsgemäß) | | | | | | | | |
| V1g | ^{®}TrigonoxC | Ascorbinsäure | ja | 700 | 34 | ja | 18950 | -43,9 |
| V1h | ^{®}TrigonoxC | Ascorbinsäure | nein | 1100 | 40 | ja | 19750 | -41,5 |
| V1i | ^{®}Trigonox C | ^{®}Brüggolit C | ja | 1200 | 59 | nein | 28000 | -17,0 |
| V1j | Mitgeführter Blindversuch ohne Redoxbehandlung | | | 7000 | 40 | nein | 33750 | Ref. |
| V1k | ^{®}Trigonox B | ^{®}Brüggolit FF06 | ja | 3800 | | | | |

| | | | | | | | | |
|---|---|---|---|---|---|---|---|---|
| V = Vergleichsbeispiele | | | | | | | | |

Diese Beispiele zeigen gegenüber den Vergleichsbeispielen (V1a-V1d), dass die nicht erfindungsgemäßen Nebenprodukte des ^{®}Brüggolit FF06 (Glyoxylsäurebisulfit-addukt*2 Na-Salz bzw. Natriumsulfit) für sich allein keinen nennenswerten Effekt zeigen.

Die erfindungsgemäßen Beispiele 1 und 1b zeigen keinen merklichen Viskositätsabfall gegenüber dem Blindversuch, der jedoch bei den Vergleichsversuchen V1e und insbesondere V1f bei Verwendung wasserlöslicher Oxidationsmittel auftritt.

Herkömmliche wasserlösliche Oxidationsmittel zeigen keinen besonderen Effekt (> 1000 ppm Restmonomergehalt) bzw. Ascorbinsäure als Reduktionsmittel führt zu einer deutlichen Vergilbung nach 3 Wochen.

### Beispiel 2 und Vergleichsbeispiel V2

Eine Dispersion auf Basis Vinylacetat/Ethylen mit einer Viskosität von 7000 mPa·s und einem Restvinylacetatgehalt von 5100 ppm wurde auf eine Temperatur von 60°C erwärmt. In der Nachbehandlung wurden 0,14 Gewichtsteile bezüglich Dispersion ^{®}Trigonox C bzw. ^{®}Trigonox AW 70 (70 %ig) (0,14 Gewichtsteile bezüglich Dispersion) unter Rühren hinzugegeben. Nach 10 Minuten erfolgte die Zugabe von 0,17 Gewichtsteile ^{®}Brüggolit FF06 als 5 %ige wässrige Lösung dosiert. Nach weiteren 10 Minuten wurde eine 0,004 Gewichtsteile einer 1 %igen wässrigen Mohr'sche Salzlösung hinzugegeben.

**Tabelle 2: Restmonomerenmengen der wässrigen Polymerdispersion vor und nach der erfindungsgemäßen Nachbehandlung (Beispiel 2) im Vergleich mit einem Hydroperoxid (^{®}Trigonox AW 70, Vergleichsbeispiel V2).**

| | vor Nachbehandlung | nach Nachbehandlung | Viskositätsänderung / % |
|---|---|---|---|
| | [ppm] | [ppm] | |
| Vinylacetat (Trig. C) | 4700 | 70 | -5 Bsp. 2 |
| Vinylacetat (Trig. AW 70) | 4700 | 810 | -15 V2 |

### Beispiele 3, 3b und Vergleichsbeispiel V3

Zehn kg Vinylacetat/Ethylen-Dispersion mit einer Viskosität von 2500 mPa·s und einem Restvinylacetatgehalt von 2000 ppm wurden auf eine Temperatur von 60°C erwärmt. In der Nachbehandlung wurden 10 g ^{®}Trigonox C (0,10 Gewichtsteile bezüglich Dispersion), 1,40g ^{®}Trigonox 42S (tert. Butylperoxy-3,5,5-trimethylhexanoat) bzw. 14,3 g ^{®}Trigonox AW 70 (70 %ig) (0,10 Gewichtsteile bezüglich Dispersion) unter Rühren hinzugegeben. Nach 10 Minuten erfolgte die Zugabe von ^{®}Brüggolit FF06 (200 g) als 5 %ige wässrige Lösung (0,10 Gewichtsteile bezüglich Dispersion). Nach weiteren 10 Minuten wurde eine 1 %ige wässrige Mohr'sche Salzlösung (40 ml, 0,004 Gewichtsteile bezüglich Dispersion) und 45 g Wasser hinzugegeben.

**Tabelle 3: Restmonomerenmengen der wässrigen Polymerdispersion vor und nach den erfindungsgemäßen Nachbehandlungen 3, 3b im Vergleich mit einem Hydroperoxid (^{®}Trigonox AW 70, Vergleichsbeispiel V3).**

| | vor Nachbehandlung | nach Nachbehandlung | Viskositätsänderung / % |
|---|---|---|---|
| | [ppm] | [ppm] | |
| Vinylacetat (Trig. C) | 2000 | 85 Beispiel 3 | - 7,7 |
| Vinylacetat (Trig. 42 S) | 2000 | 41 Beispiel 3b | - 3,2 |
| Vinylacetat (H₂O₂) | 2000 | 900 Vergleichsbeispiel V3 | - 25 |

### Beispiel 4 und Vergleichsbeispiel V4

10 kg VinylacetatlAcrylat/VeoVa10-Dispersion mit einer Viskosität von 200 mPa·s und einem Restvinylacetatgehalt von 600 ppm wurden auf eine Temperatur von 60°C erwärmt. In der Nachbehandlung wurden 17,1 g ^{®}Trigonox C (0,17 Gewichtsteile bzgl. Dispersion) bzw. 24,4 g ^{®}Trigonox AW 70 (70 %ig) (0,17 Gewichtsteile bzgl. Dispersion) unter Rühren hinzugegeben. Nach 10 Minuten erfolgte die Zugabe von ^{®}Brüggolit FF06 (342 g) als 5 %ige wässrige Lösung (0,17 Gewichtsteile bzgl. Dispersion). Nach weiteren 10 Minuten wurde eine 1 %ige wässrige Mohr'sche Salzlösung (40 ml, 0,004 Gewichtsteile bzgl. Dispersion) und 49 g Wasser hinzugegeben.

**Tabelle 4: Restmonomerenmengen der wässrigen Polymerdispersion vor und nach der erfindungsgemäßen Nachbehandlung (Beispiel 4) im Vergleich mit einem Hydroperoxid (^{®}Trigonox AW 70, Vergleichsbeispiel V4). Die Restgehalte für ^{®}VeoVA10 und das Acrylat waren in beiden Fällen < 10 ppm.**

| | vor Nachbehandlung | nach Nachbehandlung | nach 7 Tagen |
|---|---|---|---|
| | [ppm] | [ppm] | [ppm] |
| Vinylacetat (Trig. C) | 600 | 30 | < 10 Bsp. 4 |
| Vinylacetat (Trig. AW 70) | 600 | 80 | 80 V4 |

### Beispiel 5 und Vergleichsbeispiel V5

10 kg Vinylacetat/Acrylat/^{®}VeoVa-Dispersion mit einer Viskosität von 200 mPa·s und einem Restvinylacetatgehalt von 600 ppm wurden auf eine Temperatur von 60°C erwärmt. In der Nachbehandlung wurden 34,2 g einer 50 %igen Emulsion von ^{®}Trigonox 21 S (tert. Butyl-2-Ethylhexanoat, 0,17 Gewichtsteile bzgl. Dispersion), hergestellt aus 17,1 g ^{®}Trigonox 21 S, 0,50g ^{®}Hostapal BV (tri-tert.-Butylphenol-EO-Sulfat, Handelsname der Clariant GmbH) und 16,6 g Wasser bzw. 24,4 g ^{®}Trigonox AW 70 (70 %ig) (0,17 Gewichtsteile bzgl. Dispersion) unter Rühren hinzugegeben. Nach 10 Minuten erfolgte die Zugabe von ^{®}Brüggolit FF06 (342 g) (0,17 Gewichtsteile bzgl. Dispersion) als 5 %ige wässrige Lösung. Nach weiteren 10 Minuten wurde eine 1 %ige wässrige Mohr'sche Salzlösung (40 ml, 0,004 Gewichtsteile bzgl. Dispersion) und 49 g Wasser hinzugegeben.

**Tabelle 5: Restmonomerenmengen der wässrigen Polymerdispersion vor und nach der erfindungsgemäßen Nachbehandlung (Beispiel 5) im Vergleich mit einem Hydroperoxid (^{®}Trigonox AW 70, Vergleichsbeispiel V5).**

| | vor Nachbehandlung | nach Nachbehandlung | nach 7 Tagen |
|---|---|---|---|
| | [ppm] | [ppm] | [ppm] |
| Vinylacetat | 600 | 20 | < 10 Bsp. 5. |
| (Trig. 21 S in Emulsion) | | | |
| Vinylacetat (Trig. AW 70) | 600 | 80 | 80 V5 |

In allen Beispielen wurde die Nachbehandlung nach Beendigung des Versuches (Gesamtzeit ab der ersten Zugabe des Oxidationsmittels betrug 65 min) mit einem Radikalfänger (100 ml einer 1 %igen Hydrochinonmonomethylether in Methanol) gestoppt.

## Patentansprüche

1. Verfahren zur Verminderung der Restmonomerenmenge in wässrigen Polymerdispersionen durch chemische Nachbehandlung, **dadurch gekennzeichnet, dass** man die Nachbehandlung in der wässrigen Polymerdispersion unter Zugabe eines Redoxsystems bei Temperaturen im Bereich von 30 bis 100°C durchführt, das aus Komponenten a), b) und gegebenenfalls c) besteht, wobei
a) aus 0,005 bis 5 Gew.-%. bezogen auf das Gesamtgewicht aller zur Herstellung der Polymerdispersion verwendeten Monomeren, mindestens eines Oxidationsmittels auf Basis eines organischen Peroxides aus der Klasse
a1) der Perester ausgewählt aus der Gruppe bestehend aus t-Butylperbenzoat, t-Butylperoxy-3,5,5-trimethylhexanoat, t-Butylperoxy-2-ethylhexanoat, Cumylperoxyneodecanoat, 1,1,3,3-Tetramethylbutylperoxyneodecanoat, t-Butylperoxyneodecanoat, 1,1,3,3-Tetramethylbutylperoxypivalat, t-Butylperoxyneoheptanoat, t-Amylperoxypivalat, t-Butylperoxypivalat, 1.1,3,3-Tetramethylbutylperoxy-2-ethylhexanoat, t-Amylperoxy-2-ethylhexanoat, t-Butylperoxydiethylacetat, t-Butylperoxyisobutyrat, t-Butylperoxyacetat, t-Amylperoxybenzoat und/oder
a2) der Percarbonate ausgewählt aus der Gruppe bestehend aus 1-(2-Ethylhexanoylperoxy)-1,3-dimethylbutylperoxypivalat, Di(2-ethylhexyl)-peroxydicarbonat, 2,5-Dimethyl-2,5-di(2-ethylhexanoyl-peroxy)hexan, t-Amylperoxy 2-ethylhexylcarbonat, t-Butylperoxyisopropylcarbonat, t-Butylperoxy-2-ethylhexylcarbonat und/oder
a3) der Perketale ausgewählt aus der Gruppe bestehend aus 1.1-Di(tert-butylperoxy)-3,3,5-trimethylcyclohexan, 2,2-Di(4,4-di(tert-butylperoxy)-cyclohexyl)propan, 1,1-Di(tert-butylperoxy)cyclohexan, 2,2-Di(tert-butylperoxy)butan, 3,6,9-Triethyl-3,6,9-trimethyl-1,4,7-triperoxonan
besteht, sowie
b) aus 0,005 bis 5 Gew.-%, bezogen auf das Gesamtgewicht aller zur Herstellung der Polymerdispersion verwendeten Monomeren, mindestens eines Reduktionsmittels aus der Gruppe der Sulfinsäuren oder deren Salzen mit der Struktur
MO-SO-CR¹²R¹³R¹⁴ (2)
besteht, das gegebenenfalls noch Sulfonsäurederivate, die kein Formaldehyd abspalten können und/oder Natriumsulfit aufweisen kann, worin
M Wasserstoff, NH₄, ein einwertiges Metallion oder ein Äquivalent eines zweiwertigen Metallions der Gruppen Ia, IIa, IIb, IVa oder VIIIb des Periodensystems ist,
R¹² = OH, NR¹⁵R¹⁶ bedeutet, mit R¹⁵ und R¹⁶ unabhängig voneinander Wasserstoff oder C₁-C₆-Alkyl,
R¹³ = Wasserstoff, Alkyl-, Alkenyl-, Cycloalkyl- oder Arylgruppe bedeutet, wobei diese Gruppen 1, 2 oder 3 Substituenten aufweisen können, die unabhängig voneinander ausgewählt sind unter C₁-C₆-Alkyl, OH, O-C₁-C₆-Alkyl, Halogen und CF₃,
R¹⁴ = COOM, SO₃M, COR¹⁵, CONR¹⁵R¹⁶ oder COOR¹⁵ bedeutet, wobei M, R¹⁵ und
R¹⁶ die oben angegebenen Bedeutungen besitzen oder, wenn R¹³ für Aryl steht, das gegebenenfalls 1, 2 oder 3 Substituenten aufweist, die unabhängig voneinander ausgewählt sind unter C₁-C₆-Alkyl, OH, O-C₁-C₆-Alkyl, Halogen und CF₃, dann R¹⁴ auch für Wasserstoff stehen kann, und den Salzen davon, und
c) gegebenenfalls aus katalytischen Mengen eines mehrwertigen Metallions, das in mehreren Wertigkeitsstufen auftreten kann.

2. Verfahren nach Anspruch 1, **dadurch gekennzeichnet, dass** das Redoxsystem zusätzlich zu Komponenten a) und b) noch katalytische Mengen eines mehrwertigen Metallions enthält, das in mehreren Wertigkeitsstufen auftreten kann.

3. Verfahren nach Anspruch 1, **dadurch gekennzeichnet, dass** als Perester a1) t-Butylperbenzoat, t-Butylperoxy-3,5,5-trimethylhexanoat und/oder t-Butylperoxy-2-ethylhexanoat, besonders bevorzugt t-Butylperbenzoat, eingesetzt werden.

4. Verfahren nach Anspruch 1, **dadurch gekennzeichnet, dass** als Reduktionsmittel 2-Hydroxyphenyl-hydroxymethyl-sulfinsäure oder deren Natriumsalz, 4-Methoxyphenyl-hydroxymethylsulfinsäure oder deren Natriumsalz, 2-Hydroxy-2-sulfinatoessigsäure oder deren Dinatrium- oder Zinksalz oder 2-Hydroxy-2-Sulfinatopropionsäure oder deren Dinatriumsalz eingesetzt werden, vorzugsweise das Dinatriumsalz der 2-Hydroxy-2-sulfinatoessigsäure.

5. Verfahren nach Anspruch 1, **dadurch gekennzeichnet, dass** die Menge an zugesetztem Oxidationsmittel im Bereich von 0,02 bis 3 Gew.-% liegt, bevorzugt von 0,02 bis 2 Gew.-%, besonders bevorzugt von 0,05 bis 1 Gew.-%, insbesondere von 0,05 bis 0,5 Gew.%, bezogen auf das Gesamtgewicht aller Monomeren, und dass die Menge an zugesetztem Reduktionsmittel im Bereich von 0,02 bis 3 Gew.-% liegt, bevorzugt von 0,02 bis 2 Gew.-%, besonders bevorzugt von 0,05 bis 1 Gew.-%, insbesondere von 0,05 bis 0,5 Gew.-%, ebenfalls bezogen auf das Gesamtgewicht aller Monomeren.

6. Verfahren nach Anspruch 1, **dadurch gekennzeichnet, dass** das Reduktionsmittel neben den Sulfinsäuren oder deren Salzen der Struktur (2) Sulfonsäurederivate, die kein Formaldehyd abspalten können und/oder Natriumsulfit enthält.

7. Verfahren nach Anspruch 6, **dadurch gekennzeichnet, dass** das Reduktionsmittel aus einer Mischung aus 2-Hydroxy-2-sulfinatoessig-säuredi-natriumsalz in einer Menge im Bereich von 50 bis 60 Gew.-%, Natriumsulfit in einer Menge im Bereich von 30 bis 35 Gew.-% und 2-Hydroxy-2-sulfonatoessig-säuredinatriumtsalz in einer Menge im Bereich von 10 bis 15 Gew.-% besteht, bezogen auf das Gesamtgewicht der Mischung.

8. Verfahren nach Anspruch 1, **dadurch gekennzeichnet, dass** man das Oxidationsmittel und das Reduktionsmittel als Komponenten zur Nachbehandlung der Polymerdispersion nacheinander in separaten Zuläufen zuführt.

9. Verfahren nach Anspruch 1, **dadurch gekennzeichnet, dass** mindestens eine Komponente dosiert zugeführt wird.

10. Verfahren nach Anspruch 1, **dadurch gekennzeichnet**, das mindestens eine der Komponenten portionsweise zugeführt wird.

11. Verfahren nach Anspruch 1, **dadurch gekennzeichnet, dass** zuerst das Oxidationsmittel und danach das Reduktionsmittel zugeführt wird.

12. Verfahren nach Anspruch 1, **dadurch gekennzeichnet, dass** das Reduktionsmittel dosiert zugeführt wird.

13. Verfahren nach Anspruch 2, **dadurch gekennzeichnet, dass** man die Metallionen zur Nachbehandlung der Polymerdispersion nach dem Oxidations- und dem Reduktionsmittel zusetzt.

14. Verfahren nach Anspruch 2, **dadurch gekennzeichnet, dass** man die Metallionen zur Nachbehandlung nach dem Oxidationsmittel und zusammen mit dem Reduktionsmittel zusetzt.

15. Verfahren nach Anspruch 2, **dadurch gekennzeichnet, dass** man als mehrwertige Metallionen Eisenionen einsetzt.

16. Verfahren nach Anspruch 1, **dadurch gekennzeichnet, dass** die Temperatur während der Nachbehandlung im Bereich von 30 bis 90°C liegt, besonders bevorzugt von 30 bis 85°C.

17. Verfahren nach Anspruch 1, **dadurch gekennzeichnet, dass** man die Nachbehandlung unter einem Druck im Bereich von ≤ 1 MPa durchführt.

18. Verfahren nach Anspruch 1, **dadurch gekennzeichnet, dass** man die Nachbehandlung bei einem pH-Wert im Bereich von 2 bis 9 durchführt.

19. Verfahren nach Anspruch 1, **dadurch gekennzeichnet, dass** es an einer Polymerdispersion mit einer Viskosität im Bereich von größer/gleich 100 mPa·s durchgeführt wird, bevorzugt von größer/gleich 1000 mPa·s, besonders bevorzugt von größer/gleich 2000 mPa·s, insbesondere von größer/gleich 5000 mPa·s.

20. Verfahren nach Anspruch 1, **dadurch gekennzeichnet, dass** es an einer Polymerdispersion durchgeführt wird, die als polymerisierbare Monomere Ester aus Vinylalkohol und 1 bis 18 C-Atome aufweisenden Monocarbonsäuren, insbesondere Vinylacetat, Vinylpropionat, Vinyl-n-butyrat, Vinyllaurat, Vinylstearat und/oder Versaticsäurevinylester enthält, vorzugsweise Vinylacetat.

21. Verfahren nach Anspruch 1, **dadurch gekennzeichnet, dass** es an einer Polymerdispersion durchgeführt wird, die als polymerisierbare Monomere Ester aus vorzugsweise 3 bis 6 C-Atome aufweisenden α,β-monoethylenisch ungesättigten Mono- und Dicarbonsäuren, insbesondere Acrylsäure, Methacrylsäure, Maleinsäure, Fumarsäure und Itaconsäure, mit 1 bis 12, vorzugsweise 1 bis 8 und insbesondere 1 bis 4 C-Atome aufweisenden Alkanolen, besonders Acrylsäure- und Methacrylsäuremethyl-, -ethyl-, -n-butyl-, -isobutyl und -2.ethylhexylester, Maleinsäuredimethylester oder Maleinsäure-di-n-butylester oder Nitrile α,β-monoethylenisch ungesättigter Carbonsäuren, insbesondere Acrylnitril enthält.

22. Verfahren nach Anspruch 1, **dadurch gekennzeichnet, dass** es an einer Polymerdispersion durchgeführt wird, die als polymerisierbare Monomere aromatische oder aliphatische α-β-ungesättigte, gegebenenfalls halogensubstituierte Kohlenwasserstoffe, insbesondere Ethen, Propen, 1-Buten, 2-Buten, Vinylchlorid, Vinylidenchlorid, Styrol, α-Methylstyrol und/oder o-Chlorstyrol enthält, wobei Ethen und Styrol bevorzugt sind.

## Claims

1. A process for reducing the amount of residual monomers in aqueous polymer dispersions by chemical aftertreatment, wherein the aftertreatment is carried out in the aqueous polymer dispersion with addition of a redox system at temperatures in the range of from 30 to 100°C, which redox system consists of components a), b) and optionally c),
a) consisting of from 0.005 to 5% by weight, based on the total weight of all monomers used for the preparation of the polymer dispersion, of at least one oxidizing agent based on an organic peroxide from the class consisting of the
a1) peresters selected from the group consisting of tert-butyl perbenzoate, tert-butyl peroxy-3,5,5-trimethylhexanoate, tert-butyl peroxy-2-ethylhexanoate, cumyl peroxyneodecanoate, 1,1,3,3-tetramethylbutyl peroxyneodecanoate, tert-butyl peroxyneodecanoate, 1,1,3,3-tetramethylbutyl peroxypivalate, tert-butyl peroxyneoheptanoate, tert-amyl peroxypivalate, tert-butyl peroxypivalate, 1,1,3,3-tetramethylbutylperoxy-2-ethylhexanoate, tert-amyl peroxy-2-ethylhexanoate, tert-butyl peroxydiethylacetate, tert-butyl peroxyisobutyrate, tert-butyl peroxyacetate, tert-amyl peroxybenzoate, and/or
a2) percarbonates selected from the group consisting of 1-(2-ethylhexanoylperoxy)-1,3-dimethylbutyl peroxypivalate, di(2-ethylhexyl) peroxydicarbonate, 2,5-dimethyl-2,5-di(2-ethylhexanoylperoxy)hexane, tert-amylperoxy 2-ethylhexyl carbonate, tert-butylperoxy isopropyl carbonate, tert-butylperoxy 2-ethylhexyl carbonate, and/or
a3) perketals selected from the group consisting of 1,1-di(tert-butylperoxy)-3,3,5-trimethylcyclohexane, 2,2-di(4,4-di(tert-butylperoxy)cyclohexyl)propane, 1,1-di(tert-butylperoxy)cyclohexane, 2,2-di(tert-butylperoxy)butane, 3,6,9-triethyl-3,6,9-trimethyl-1,4,7-triperoxononane,
and
b) consisting of from 0.005 to 5% by weight, based on the total weight of all monomers used for the preparation of the polymer dispersion, of at least one reducing agent from the group consisting of the sulfinic acids and the salts thereof having the structure
MO-SO-CR¹²R¹³R¹⁴ (2)
which optionally may also have sulfonic acid derivatives, which are not able to eliminate formaldehyde, and/or sodium sulfite, in which M is hydrogen, NH₄, a monovalent metal ion or one equivalent of a divalent metal ion of the groups Ia, IIa, IIb, IVa or VIIIb of the Periodic Table of the Elements,
R¹² = OH, NR¹⁵R¹⁶, in which R¹⁵ and R¹⁶, independently of one another, are hydrogen or C₁-C₆-alkyl,
R¹³ = hydrogen or an alkyl, alkenyl, cycloalkyl or aryl group, it being possible for these groups to have 1, 2 or 3 substituents which, independently of one another, are selected from C₁-C₆-alkyl, OH, O-C₁-C₆-alkyl, halogen and CF₃,
R¹⁴ = COOM, SO₃M, COR¹⁵, CONR¹⁵R¹⁶ or COOR¹⁵, in which M,
R¹⁵ and R¹⁶ have the meanings stated above, or, if R¹³ is aryl, which optionally has 1, 2 or 3 substituents which, independently of one another, are selected from C₁-C₆-alkyl, OH, O-C₁-C₆-alkyl, halogen and CF₃, then R¹⁴ may also be hydrogen, and the salts thereof, and
c) optionally consisting of catalytic amounts of a polyvalent metal ion which may occur in a plurality of valency states.

2. The process as claimed in claim 1, wherein the redox system, in additin to components a) and b), also contains catalytic amounts of a polyvalent metal ion which may occur in a plurality of valency states.

3. The process as claimed in claim 1, wherein tert-butyl perbenzoate, tert-butyl peroxy-3,5,5-trimethylhexanoate and/or tert-butyl peroxy-2-ethylhexanoate, particularly preferably tert-butyl perbenzoate, are used as peresters a1).

4. The process as claimed in claim 1, wherein 2-hydroxyphenylhydroxymethylsulfinic acid or the sodium salt thereof, 4-methoxyphenylhydroxymethylsulfinic acid or the sodium salt thereof, 2-hydroxy-2-sulfinatoacetic acid or the disodium or zinc salt thereof or 2-hydroxy-2-sulfinatopropionic acid or the disodium salt thereof is used as the reducing agent, preferably the disodium salt of 2-hydroxy-2-sulfinatoacetic acid.

5. The process as claimed in claim 1, wherein the amount of oxidizing agent added is in the range of from 0.02 to 3% by weight, preferably from 0.02 to 2% by weight, particularly preferably from 0.05 to 1% by weight, in particular from 0.05 to 0.5% by weight, based on the total weight of all monomers, and wherein the amount of reducing agent added is in the range of from 0.02 to 3% by weight, preferably from 0.02 to 2% by weight, particularly preferably from 0.05 to 1% by weight, in particular from 0.05 to 0.5% by weight, likewise based on the total weight of all monomers.

6. The process as claimed in claim 1, wherein the reducing agent contains sulfonic acid derivatives which are not able to eliminate formaldehyde, and/or sodium sulfite, in addition to the sulfinic acids or salts thereof of the structure (2).

7. The process as claimed in claim 6, wherein the reducing agent comprises a mixture of disodium 2-hydroxy-2-sulfinatoacetate in an amount in the range of from 50 to 60% by weight, sodium sulfite in an amount in the range of from 30 to 35% by weight and disodium 2-hydroxy-2-sulfonatoacetate in an amount in the range of from 10 to 15 % by weight, based on the total weight of the mixture.

8. The process as claimed in claim 1, wherein the oxidizing agent and the reducing agent are fed in in succession in separate feeds as components for the aftertreatment of the polymer dispersion.

9. The process as claimed in claim 1, wherein at least one component is fed in by metering.

10. The process as claimed in claim 1, wherein at least one of the components is fed in in portions.

11. The process as claimed in claim 1, wherein first the oxidizing agent and then the reducing agent are added.

12. The process as claimed in claim 1, wherein the reducing agent is fed in by metering.

13. The process as claimed in claim 2, wherein the metal ions for the aftertreatment of the polymer dispersion are added after the oxidizing agent and the reducing agent.

14. The process as claimed in claim 2, wherein the metal ions for the aftertreatment are added after the oxidizing agent and together with the reducing agent.

15. The process as claimed in claim 2, wherein the polyvalent metal ions used are iron ions.

16. The process as claimed in claim 1, wherein the temperature during the aftertreatment is in the range of from 30 to 90°C, particularly preferably from 30 to 85°C.

17. The process as claimed in claim 1, wherein the aftertreatment is carried out under a pressure in the range of ≤ 1 MPa.

18. The process as claimed in claim 1, wherein the aftertreatment is carried out at a pH in the range of from 2 to 9.

19. The process as claimed in claim 1, which is carried out using a polymer dispersion having a viscosity in the range of greater than or equal to 100 mPa·s, preferably greater than or equal to 1000 mPa·s, particularly preferably greater than or equal to 2000 mPa·s, in particular greater than or equal to 5000 mPa·s.

20. The process as claimed in claim 1, which is carried out using a polymer dispersion which contains, as polymerizable monomers, esters of vinyl alcohol and monocarboxylic acids having from 1 to 18 carbon atoms, in particular vinyl acetate, vinyl propionate, vinyl n-butyrate, vinyl laurate, vinyl stearate and/or vinyl versatate, preferably vinyl acetate.

21. The process as claimed in claim 1, which is carried out using a polymer dispersion which contains, as polymerizable monomers, esters of α,β-monoethylenically unsaturated mono- and dicarboxylic acids preferably having from 3 to 6 carbon atoms, in particular acrylic acid, methacrylic acid, maleic acid, fumaric acid and itaconic acid, alkanols having from 1 to 12, preferably from 1 to 8 and in particular from 1 to 4 carbon atoms, in particular methyl, ethyl, n-butyl, isobutyl and 2-ethylhexyl acrylate and methacrylate, dimethyl maleate or di-n-butyl maleate, or nitriles of α,β-monoethylenically unsaturated carboxylic acids, in particular acrylonitrile.

22. The process as claimed in claim 1, which is carried out using a polymer dispersion which contains, as polymerizable monomers, aromatic or aliphatic α,β-unsaturated, unsubstituted or halogen-substituted hydrocarbons, in particular ethene, propene, 1-butene, 2-butene, vinyl chloride, vinylidene chloride, styrene, α-methylstyrene and/or o-chlorostyrene, ethene and styrene being preferred.

## Revendications

1. Procédé pour diminuer par traitement chimique ultérieur la quantité résiduelle de monomère dans des dispersions aqueuses de polymère, **caractérisé en ce que** l'on exécute le traitement ultérieur dans la dispersion aqueuse de polymère à des températures dans l'intervalle de 30 à 100 °C, moyennant l'addition d'un système redox consistant en les composants a), b) et, le cas échéant, c), sachant que
a) consiste en 0,005 à 5 % en poids, rapportés au poids total de tous les monomères utilisés à la préparation de la dispersion de polymère, d'au moins un oxydant à base d'un peroxyde organique de la classe
a1) des peresters, choisis dans le groupe consistant en le tert-butyle perbenzoate, le tert-butylperoxy-3,5,5-triméthylhexanoate, le tert-butylperoxy-2-éthylhexanoate, le cumylperoxynéodécanoate, le 1,1,3,3-tétraméthylbutylperoxynéodécanoate, le tert-butylperoxynéodécanoate, le 1,1,3,3-tétraméthylbutylperoxypivalate, le tert-butylperoxynéoheptanoate, le tertamylperoxypivalate, le tert-butylperoxypivalate, le 1,1,3,3-tetraméthylbutylperoxy-2-éthylhexanoate, le tert-amylperoxy-2-éthylhexanoate, le tertbutylperoxydiéthylacétate, le tert-butylperoxyisobutyrate, le tert-butylperoxyacétate, le tert-amylperoxybenzoate et/ou
a2) des percarbonates, choisis dans le groupe consistant en le 1-(2-éthylhexanoylperoxy)-1,3-diméthylbutylperoxypivalate, le di(2-éthylhexyl)-peroxydicarbonate, le 2,5-diméthyl-2,5-di(2-éthylhexanoyl-peroxy)hexane, le tert-amylperoxy-2-éthylhexylcarbonate, le tert-butylperoxy-isopropylcarbonate, le tert-butylperoxy-2-éthylhexylcarbonate et/ou
a3) des percétals, choisis dans le groupe consistant en le 1,1-Di(tert-butylperoxy)-3,3,5-triméthylcyclohexane, le 2,2-di(4,4-di(tert-butylperoxy)-cyclohexyl)propane, le 1,1-di(tert-butylperoxy)cyclohexane, le 2,2-di(tert-butylperoxy)butane, le 3,6,9-triéthyl-3,6,9-triméthyl-1,4,7-triperoxonane
b) consiste en 0,005 à 5 % en poids, rapportés au poids total de tous les monomères utilisés à la préparation de la dispersion de polymère, d'au moins un agent réducteur du groupe des acides sulfiniques ou de leurs sels avec la structure
MO-SO-CR¹²R¹³R¹⁴ (2)
qui peut comporter le cas échéant encore des dérivés d'acides sulfoniques qui ne peuvent pas éliminer de formaldéhyde et/ou du sulfite de sodium, dans laquelle
M est un hydrogène, un NH₄, un ion métallique univalent ou un équivalent d'un ion métallique divalent des groupes Ia, IIa, IIb, IVa ou VIIIb du système périodique,
R¹² signifie OH, NR¹⁵R¹⁶, avec R¹⁵ et R¹⁶, indépendamment l'un de l'autre, un hydrogène ou un alkyle en C₁ à C₆,
R¹³ signifie un hydrogène, un groupe alkyle, alcényle, cycloalkyle ou aryle, sachant que ces groupes peuvent comporter 1, 2 ou 3 substituants, qui sont choisis indépendamment les uns des autres parmi un alkyle en C₁ à C₆, un OH, O-(alkyle en C₁ à C₆), un halogène et un CF₃,
R¹⁴ signifie COOM, SO3M, COR¹⁵, CONR¹⁵R¹⁶ ou COOR¹⁵, sachant que M, R¹⁵ et R¹⁶ possèdent les significations données ci-dessus ou, si R¹³ représente un aryle qui comporte le cas échéant 1, 2 ou 3 substituants qui, indépendamment les uns des autres, sont choisis parmi un alkyle en C₁ à C₆, un OH, un O-(alkyle en C₁ à C₆), un halogène et un CF₃, alors R¹⁴ peut aussi représenter un hydrogène, et les sels de ces substances, et
c) consiste le cas échéant en quantités catalytiques d'un ion métallique multivalent, qui peut apparaître en plusieurs niveaux de valence.

2. Procédé selon la revendication 1, **caractérisé en ce que** le système redox contient en plus des composants a) et b) des quantités catalytiques d'un ion métallique multivalent, qui peut apparaître en plusieurs niveaux de valence.

3. Procédé selon la revendication 1, **caractérisé en ce que** comme perester a1), on utilise du tert-butylperbenzoate, du tert-butylperoxy-3,5,5-triméthylhexanoate et/ou du tert-butylperoxy-2-éthylhexanoate, de manière particulièrement préférée du tert-butylperbenzoate.

4. Procédé selon la revendication 1, **caractérisé en ce que** l'on utilise comme agent réducteur de l'acide 4-hydroxyphényl-hydroxyméthylsulfinique ou son sel de sodium, de l'acide 2-méthoxyphényl-hydroxyméthylsulfinique ou son sel de sodium, de l'acide 2-hydroxy-2-sulfinato-acétique ou son sel disodique ou de zinc, ou de l'acide 2-hydroxy-2-sulfinato-propionique ou son sel disodique, de préférence le sel disodique de l'acide 2-hydroxy-2-sulfinato-acétique.

5. Procédé selon la revendication 1, **caractérisé en ce que** la quantité de l'agent oxydant ajouté se trouve dans la plage de 0,02 à 3 % en poids, de préférence de 0,02 à 2 % en poids, de façon particulièrement préférée de 0,05 à 1 % en poids, en particulier de 0,05 à 0,5 % en poids, rapportée au poids total de tous les monomères, et **en ce que** la quantité de l'agent réducteur ajouté se trouve dans la plage de 0,02 à 3 % en poids, de préférence de 0,02 à 2 % en poids, de façon particulièrement préférée de 0,05 à 1 % en poids, en particulier de 0,05 à 0,5 % en poids, rapportée également au poids total de tous les monomères.

6. Procédé selon la revendication 1, **caractérisé en ce que** l'agent réducteur contient, en plus des acides sulfiniques ou de leurs sels de la structure (2), des dérivés d'acides sulfoniques qui ne peuvent pas éliminer de formaldéhyde, et/ou du sulfite de sodium.

7. Procédé selon la revendication 6, **caractérisé en ce que** l'agent réducteur consiste en un mélange de sel disodique de l'acide 2-hydroxy-2-sulfinato-acétique, en une quantité dans l'intervalle de 50 à 60 % en poids, de sulfite de sodium en une quantité dans l'intervalle de 30 à 35 % en poids et de sel disodique de l'acide 2-hydroxy-2-sulfonato-acétique en une quantité dans l'intervalle de 10 à 15 % en poids, rapportée au poids total du mélange.

8. Procédé selon la revendication 1, **caractérisé en ce que** l'on achemine l'agent oxydant et l'agent réducteur, comme composants pour le traitement ultérieur de la dispersion de polymère, l'un après l'autre dans des additions séparées.

9. Procédé selon la revendication 1, **caractérisé en ce qu'**au moins un composant est acheminé dosé.

10. Procédé selon la revendication 1, **caractérisé en ce que** qu'au moins un composant est acheminé par portions.

11. Procédé selon la revendication 1, **caractérisé en ce que** l'agent oxydant est acheminé en premier, puis l'agent réducteur.

12. Procédé selon la revendication 1, **caractérisé en ce que** l'agent réducteur est acheminé dosé.

13. Procédé selon la revendication 2, **caractérisé en ce que** l'on ajoute les ions métalliques pour le traitement ultérieur de la dispersion de polymère après l'agent oxydant et l'agent réducteur.

14. Procédé selon la revendication 2, **caractérisé en ce que** l'on ajoute les ions métalliques pour le traitement ultérieur de la dispersion de polymère après l'agent oxydant et ensemble avec l'agent réducteur.

15. Procédé selon la revendication 2, **caractérisé en ce que** l'on utilise comme ions métalliques multivalents des ions fer.

16. Procédé selon la revendication 1, **caractérisé en ce que** pendant le traitement ultérieur, la température est comprise dans la plage de 30 à 90 °C, de façon particulièrement préférée de 30 à 85 °C.

17. Procédé selon la revendication 1, **caractérisé en ce que** l'on exécute le traitement ultérieur sous une pression dans la plage de ≤1 MPa.

18. Procédé selon la revendication 1, **caractérisé en ce que** l'on exécute le traitement ultérieur à une valeur du pH dans l'intervalle de 2 à 9.

19. Procédé selon la revendication 1, **caractérisé en ce qu'**il est exécuté sur une dispersion de polymère avec une viscosité dans la plage de « supérieur ou égal à 100 mPa.s », de préférence dans la plage de « supérieur ou égal à 1000 mPa.s », de façon particulièrement préférée dans la plage de « supérieur ou égal à 2000 mPa.s », en particulier dans la plage de « supérieur ou égal à 5000 mPa.s ».

20. Procédé selon la revendication 1, **caractérisé en ce qu'**il est exécuté sur une dispersion de polymère qui contient comme monomère polymérisable un ester de l'alcool vinylique et d'un acide monocarboxylique présentant 1 à 18 atomes de carbone, et particulier de l'acétate de vinyle, du propionate de vinyle, du n-butyrate de vinyle, du laurate de vinyle, du stéarate de vinyle et/ou de l'ester vinylique de l'acide « versatic », de préférence de l'acétate de vinyle.

21. Procédé selon la revendication 1, **caractérisé en ce qu'**il est exécuté sur une dispersion de polymère qui contient comme monomère polymérisable un ester d'acide mono- ou dicarboxylique monoéthyléniquement insaturé en α,β, présentant de préférence 3 à 6 atomes de carbone, en particulier de l'acide acrylique, de l'acide méthacrylique, de l'acide maléique, de l'acide fumarique et de l'acide itaconique, avec des alcanols présentant 1 à 12, de préférence 1 à 8 et en particulier 1 à 4 atomes de carbone, en particulier des esters méthyliques, éthyliques, n-butyliques, isobutyliques et 2-éthylhexyliques des acides acrylique et méthacrylique, de l'ester diméthylmaléique, de l'ester di-n-butylmaléique, ou des nitriles d'acides carboxyliques monoéthyléniquement insaturés en α,β en particulier de l'acrylonitrile.

22. Procédé selon la revendication 1, **caractérisé en ce qu'**il est exécuté sur une dispersion de polymère qui contient comme monomères polymérisables des hydrocarbures aromatiques ou aliphatiques insaturés en α,β, le cas échéant substitués par des halogènes, en particulier de l'éthène, du propène, du 1-butène, du 2-butène, du chlorure de vinyle, du chlorure de vinylidène, du styrène, de l'α-méthylstyrène et/ou de l'o-chlorostyrène, l'éthène et le styrène étant préférés.
